(19) **Europäisches Patentamt**
**European Patent Office**
**Office européen des brevets**

(11) **EP 1 305 260 B1**

(12) **FASCICULE DE BREVET EUROPEEN**

(45) Date de publication et mention
de la délivrance du brevet:
**13.06.2007 Bulletin 2007/24**

(51) Int Cl.:
***C01B 25/12*** *(2006.01)*

(21) Numéro de dépôt: **01963051.6**

(22) Date de dépôt: **02.08.2001**

(86) Numéro de dépôt international:
**PCT/FR2001/002527**

(87) Numéro de publication internationale:
**WO 2002/012119 (14.02.2002 Gazette 2002/07)**

(54) **PROCEDE DE PREPARATION DE POUDRE DE PENTOXYDE DE PHOSPHORE AYANT UNE COULABILITE AMELIOREE**

VERFAHREN ZUR HERSTELLUNG VON PHOSPHORPENTOXIDPULVER MIT VERBESSERTER FLIESSFÄHIGKEIT

METHOD FOR PREPARING PHOSPHORUS PENTOXIDE POWDER WITH ENHANCED FLUIDITY

(84) Etats contractants désignés:
**AT BE CH CY DE DK ES FI FR GB GR IE IT LI LU MC NL PT SE TR**

(30) Priorité: **04.08.2000 FR 0010348**

(43) Date de publication de la demande:
**02.05.2003 Bulletin 2003/18**

(73) Titulaire: **Arkema France**
**92800 Puteaux (FR)**

(72) Inventeur: **MAGNE, Vincent**
**F-76290 Montvilliers (FR)**

(56) Documents cités:
**EP-A- 0 189 766        EP-A- 0 242 678**
**FR-A- 1 320 754**

- **MALHOTRA K ET AL: "Particle mixing and solids flowability in granular beds stirred by paddle-type blades" POWDER TECHNOL;POWDER TECHNOLOGY MAY 1990, vol. 61, no. 2, mai 1990 (1990-05), pages 155-164, XP000998125**
- **PATENT ABSTRACTS OF JAPAN vol. 015, no. 421 (C-0878), 25 octobre 1991 (1991-10-25) & JP 03 174238 A (MITA IND CO LTD), 29 juillet 1991 (1991-07-29)**

**Description**

La présente invention concerne un procédé pour la préparation de poudre de pentoxyde de phosphore (variété hexagonale), ci-après $P_2O_5$, ayant une coulabilité améliorée.

Le $P_2O_5$ est obtenu industriellement par combustion du phosphore blanc dans un courant d'air sec en large excès. La réaction est exothermique et fait monter la température vers 1 300°C. Les gaz de combustion qui en résultent, consistant en un mélange d'air appauvrit en $O_2$ et de $P_2O_5$ gazeux sont amenés dans un condenseur (désublimateur) où $P_2O_5$ cristallise sous forme de poudre. Ensuite, la poudre de $P_2O_5$ obtenue est généralement tamisée puis conditionnée en fût ou en conteneur.

Le $P_2O_5$ est un produit industriel important. Il est notamment utilisé comme réactif intermédiaire dans l'élaboration de nombreux esters phosphoriques utilisés notamment dans les domaines agrochimiques ou pharmaceutiques. Ces esters phosphoriques sont généralement obtenus en faisant réagir $P_2O_5$ solide sur un alcool (généralement sous forme liquide ou en solution). Ces réactions mettent en oeuvre deux phases différentes et nécessitent d'avoir un mode de mélange efficace ainsi qu'un moyen d'introduction de la poudre de $P_2O_5$ adapté afin de respecter la stoechiométrie, la cinétique des réactions et d'éviter de trop brusques dégagements de chaleur lorsque la poudre de $P_2O_5$ est introduit.

Il est donc nécessaire d'avoir une poudre de $P_2O_5$, ayant de bonnes propriétés de mise en oeuvre, de transport, de dispersion dans un milieu réactionnel, notamment une bonne coulabilité (ou écoulement).

Par coulabilité, on désigne présentement la capacité que possède une poudre à s'écouler de façon stable, uniforme et régulière sous forme de particules individuelles à travers un orifice plus ou moins large.

De nombreux tests permettent d'appréhender la coulabilité des poudres.

Le test dit de tassement est généralement considéré comme étant le plus approprié à l'évaluation de la coulabilité des poudres de $P_2O_5$.

Ce test consiste à mesurer l'aptitude d'une poudre à se tasser sous l'action de petits chocs produits par une canne normalisée. La mesure consiste à estimer la différence entre le volume initial et le volume occupé après 500 coups. Plus une poudre se tasse, moins bonne est sa coulabilité.

En se basant sur ce test, trois indices peuvent être déterminés :

- la densité apparente aérée da,
- la densité apparente tassée dt, et
- le rapport Hausner Hr qui est égal au rapport dt/da.

Lorsque Hr diminue, la coulabilité de la poudre s'améliore car la densité $d_a$ se rapproche de la densité dt.

En d'autres termes, les interstices entre particules sont plus difficilement comblables par d'autres particules de taille plus réduite. L'accumulation de ces fines entre les particules de taille divers provoquent une augmentation des forces interparticulaires entravant ainsi l'écoulement global de la poudre. Le rapport Hr est donc significatif de l'arrangement des particules entre elles. Ainsi, une poudre de $P_2O_5$, présentant un Hr allant de 1 à 1,25 présente peu de problèmes de mise en oeuvre. La densité da est proche de la densité dt.

La densité apparente tassé dt, seule, n'est certes pas un indice de coulabilité, toutefois sa détermination complète la connaissance de Hr dans la mesure où, pour une poudre de taille de particules donnée, si la densité dt est importante, alors les forces gravitationnelles deviennent supérieures aux forces interparticulaires, d'où un écoulement naturel favorisé. Pour un même Hr, quand dt décroît, l'écoulement est favorisé. Hr est un paramètre adimentionnel, $d_t$ permet de comparer des poudres entre elles.

La densité apparente aérée (ou réelle) da ne peut servir, non plus, d'indice de coulabilité mais est utilisée dans les techniques pour le transport et le conditionnement des poudres de $P_2O_5$.

La demanderesse a constaté que, dans la préparation industrielle de $P_2O_5$ telle que mentionnée précédemment, elle obtenait de façon tout à fait aléatoire des lots de poudre de $P_2O_5$ ayant une mauvaise coulabilité (Hr élevé) ; rédhibitoire pour son utilisation ultérieure, notamment, pour son utilisation en tant que réactif intermédiaire pour la synthèse des esters phosphoriques.

Le brevet EP 189766 B1 décrit un procédé permettant notamment d'améliorer la coulabilité des poudres de $P_2O_5$. Ce procédé consiste à chauffer des poudres de $P_2O_5$ (variété hexagonale) à des températures allant de 200°C à 390°C pendant 0,5 à 8 heures dans un réacteur fermé, éventuellement agité.

Ce procédé permet d'obtenir une amélioration sensible de la coulabilité des poudres de $P_2O_5$, amélioration obtenue cependant en utilisant des températures élevées et des durées "de recuit" longues, conditions grevant considérablement la productivité d'un procédé industriel. En outre, ce procédé nécessite un investissement en matériel onéreux.

Ce traitement thermique ou recuit abaisse en outre la "réactivité" de la poudre $P_2O_5$ (variété hexagonale). Cette réactivité est évaluée par un test simple qui consiste à faire réagir une solution de $P_2O_5$ dans un solvant aromatique tel que l'orthodichlorobenzène avec un phénol.

On mesure alors le dégagement de chaleur engendré par la réaction pendant une durée déterminée.

La réactivité du $P_2O_5$ est donc quantifiée en °C/min.

Cette réactivité propre à $P_2O_5$ hexagonale est une caractéristique de plus en plus exigée par nombre d'utilisateurs de $P_2O_5$ qui souhaitent avoir une poudre de $P_2O_5$ ayant une bonne coulabilité et une réactivité élevée.

La demanderesse a trouvé que l'on pouvait obtenir une poudre de $P_2O_5$ (variété hexagonale) ayant une coulabilité améliorée, une bonne dispersion et conservant une réactivité élevée, en soumettant de la poudre de $P_2O_5$ à un traitement mécanique par voie sèche à température ambiante.

L'objet de l'invention est donc un procédé de préparation d'une poudre de pentoxyde de phosphore (variété hexagonale), à coulabilité améliorée, caractérisé en ce que l'on soumet ladite poudre à une agitation mécanique par voie sèche, à température ambiante, sous atmosphère de gaz sec, pendant une durée allant de 5 minutes à 30 minutes et, de préférence, comprise entre 10 et 20 minutes.

La poudre de $P_2O_5$ soumise à un tel traitement mécanique peut avoir diverses origines.

Elle peut provenir d'une zone de stockage de poudre de $P_2O_5$. Elle peut également provenir directement d'un procédé de fabrication de $P_2O_5$ qui consiste à introduire en continu du phosphore blanc liquide et de l'air sec en excès par rapport à la stoechiométrie de la réaction :

$$P_4 + 25 [0{,}2O_2 + 0{,}8N_2] \rightarrow P_4O_{10} (2P_2O_5) + 2O\ N_2$$

dans une zone de combustion, à refroidir les gaz de combustion sortant de cette zone des dans condenseur (ou désublimateurs), à récupérer la poudre de $P_2O_5$ obtenue dans lesdits condenseurs et à l'acheminer au moyen d'une vis transporteuse vers une zone de traitement mécanique selon la présente invention.

Dans ce cas, la poudre de $P_2O_5$ obtenue, sortant de la vis transporteuse peut se trouver à une température légèrement supérieure à la température ambiante.

Selon la présente invention, on désigné par température ambiante, une température allant de 15°C à 30°C et, de préférence comprise entre 20 et 25°C. Cette température est la température du traitement mécanique et signifie que ledit traitement est effectué dans un dispositif qui est ni chauffé, ni refroidi.

Selon la présente invention, le traitement mécanique de la poudre de $P_2O_5$ est réalisée par voie sèche. Cela signifie que l'on utilise aucun solvant lors de ce traitement.

On opère sous atmosphère de gaz sec tel que de l'air. L'utilisation d'un gaz inerte n'est pas nécessaire.

Selon la présente invention, l'opération d'agitation mécanique peut être réalisée dans tout appareil permettant une désagglomération efficace des poudres.

De préférence, on utilisera des mélangeurs dits à "soc de charrue" présentant une vitesse d'agitation allant de 100 tr/min à 350 tr/min et, de préférence, allant de 150 tr/min à 300 tr/min et permettant d'obtenir un nombre de Froude Fr, représentant le rapport des forces centrifuges sur les forces de gravite pouvant aller jusqu'à 5.

La charge de la poudre soumise à l'agitation dans le mélangeur est défini par la puissance massique Pm selon la relation :

$$P_M = kW / kg\ de\ produit\ à\ traiter\ (kw.kg^{-1})$$

La durée d'agitation est courte, généralement 10 à 15 minutes suffisent pour obtenir une poudre de bonne coulabilité, c'est-à-dire une poudre présentant un Hr $\leq$ 1,25.

Selon la présente invention, la poudre de $P_2O_5$ agitée est transférée dans une zone de stockage avant son conditionnement.

Le procédé selon la présente invention présente l'avantage de conduire à une poudre de $P_2O_5$ ayant de bonnes propriétés de mise en oeuvre, une bonne dispersion notamment, une bonne coulabilité (Hr $\leq$ 1,25) ceci, sans addition d'un quelconque agent anti-mottant et présentant également une réactivité au moins égale, voire supérieure à celle mesurée avant le traitement mécanique.

Les exemples qui suivent illustrent l'invention.

**<u>EXEMPLES :</u>**

**Obtention de la poudre de $P_2O_5$ :**

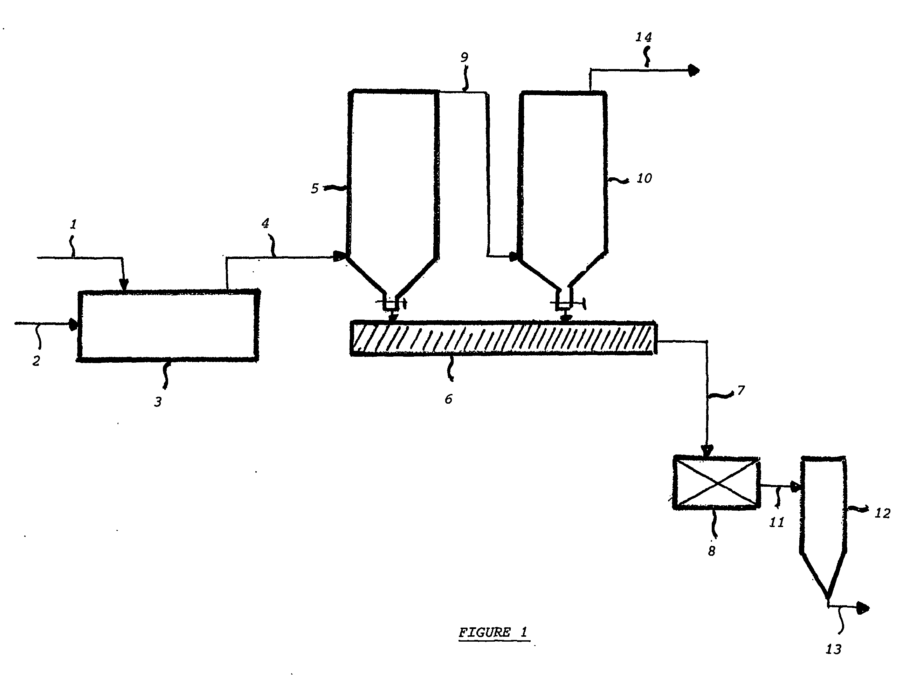

La poudre de $P_2O_5$ a été obtenue dans une installation telle que schématisée sur la figure 1 selon un procédé qui consiste à introduire en continu du phosphore blanc liquide par la conduite (1) et de l'air sec par la conduite (2) dans une zone de combustion (3) constituée par une enceinte cylindrique refroidie.

Les gaz de combustion sortant de la zone de combustion à une température comprise entre 600°C et 650°C sont acheminés par la conduite (4) vers un condenseur (5) de forme cylindrique terminé par une partie tronconique, refroidi par un film d'eau à débit régulé, dans lequel les particules solides de $P_2O_5$ se forment dans les gaz refroidis et croissent jusqu'à précipiter au sein du mélange gazeux pour former une masse solide finement divisée tombant au bas dudit condenseur dans la trémie et qui est acheminée ensuite au moyen d'une vis transporteuse à ruban (6) et d'une conduite (7) dans un mélangeur (8) où elle subira le traitement mécanique selon l'invention.

Les gaz sortant du condenseur (5) sont acheminés par la conduite (9) dans un second condenseur (10), identique au condenseur (5), duquel également on récupère de la poudre de $P_2O_5$ qui tombe dans la même vis transporteuse (6).

Les gaz sortant du condenseur (10), constitués par de l'air appauvri, sont rejetés dans l'atmosphère par la conduite (14).

La poudre traitée est acheminée par la conduite (11) vers une zone de stockage (2) à partir de laquelle est assuré le conditionnement via (13).

De la poudre de $P_2O_5$ est prélevée avant et après le mélangeur (8) par un dispositif non représenté sur la figure 1 pour déterminer ses caractéristiques de coulabilité et de réactivité.

Nous reportons ci-après dans le tableau 1 les conditions opératoires de fabrication des poudres de $P_2O_5$.

TABLEAU 1

| Conditions | Débits | |
|---|---|---|
| | Phosphore blanc liquide (kg/h) | Air sec (Nm$^3$/h) |
| A | 180 | 1 100 |
| B | 100 | 700 |

### Traitement mécanique des poudres de $P_2O_5$ obtenues selon les conditions A et B :

Appareil utilisé :

Mélangeur à soc de charrue type MXC 0150 de 150 litres, commercialisé par la société GERICKE

Conditions du traitement mécanique :

- température : environ 25 °C
- vitesse d'agitation (tr/min) : 300
- charge (kg) : 80
- puissance massique Pm (W.kg$^{-1}$) : 56
- durée d'agitation (min) : 15
- gaz utilisé : air sec.

Résultats du traitement:

Les caractéristiques:

- densité aérée $d_a$,
- densité tassée $d_t$,
- rapport Hausner Hr = $d_t/d_a$, et la réactivité des poudres de $P_2O_5$ traitées selon l'invention et non traitées sont reportées dans le tableau 2. Ces caractéristiques ont été déterminées en utilisant les tests ci-après.

### Test de tassement :

Principe :

Le rapport Hr mesure l'aptitude des particules à se tasser sous l'action de petits chocs normalisés. On verse une quantité déterminée de poudre dans une éprouvette. La, mesure consiste alors à noter le volume initial de l'échantillon puis le volume occupé par la poudre après un nombre de chocs choisis.

Le rapport Hr est déterminé avec un voluminomètre.

### Matériel :

- boîte à gants sous air sec,
- voluminomètre (appareil utilisé pour tasser la poudre conforme aux normes ISO R787 et ASTM B522 70),
- éprouvettes de 250 ml à pied rond,
- balance,
- entonnoir en acier inox,
- tamis en inox de diamètre 2 mm,
- pelle en acier inox,
- spatule

lavés et séchés sous étuve à 80°C.

Mode opératoire :

1. Tamiser la poudre à analyser de manière à éliminer les différents cas de tassement dus aux manipulations antérieures.
2. On met 100 g plus ou moins 2 g dans une éprouvette, à l'aide de l'entonnoir. Pour permettre à la poudre de s'écouler, on tapote sur l'entonnoir régulièrement avec une plaque inox, en prenant garde de ne pas toucher les bord de l'éprouvette. Il faut également veiller à ne pas tasser la poudre et à ne pas en déposer trop le long du verre du cylindre gradué. Noter la masse et le volume.
3. Placer l'éprouvette sur le voluminomètre, lui faire effectuer 500 coups. Renouveler cette opération trois fois.

### Calcul:

*Densité aérée :* masse de poudre introduit dans l'éprouvette / volume initial (avant tassement)
*Densité tassée :* masse de poudre introduit dans l'éprouvette / volume final (après tassement)
*Rapport d'Hausner :* Hr : Densité tassée / Densité aérée.

Interprétation des résultats :

Hr ≤ 1,25 : très bonne aptitude à l'écoulement,
1,26 ≤ Hr ≤ 1,30 : bonne aptitude à l'écoulement,
1,31 ≤ Hr ≤ 1,4 : écoulement difficile,
Hr > 1,4 : écoulement libre quasi-impossible.

### Test de réactivité :

Principe :

On fait réagir le $P_2O_5$ sur un phénol. On enregistre l'évolution de température du mélange en fonction du temps, et on détermine la réactivité par la mesure de la pente de la tangente au point d'inflexion de la courbe : température = f (temps).

Température du début de l'essai : 25°C
Introduction du phénol en une seule fois.

Réactifs :

- xylénol (2-4 diméthylphénol)
- orthodichlorobenzène

Matériel :

- 1 agitateur à courant continu avec tachymètre et équipé d'un agitateur à ancre,
- 1 appareil enregistreur de température équipé d'une sonde thermocouple fer/constantan,
- 1 bain réglable à 25°C,
- 1 balance de laboratoire,
- 1 vase Dewar

Mode opératoire:

- mettre dans le bain chauffant réglé à 30°C les flacons de réactifs,
- laver le vase Dewar à l'eau chaude et le sécher à l'acétone,
- peser exactement 20 g de $P_2O_5$ dans le vase Dewar propre et sec,
- placer le vase Dewar sur un anneau en caoutchouc et ajuster l'agitateur de façon à laisser le moins de vide possible entre l'agitateur et la paroi du vase (environ 1 mm),
- s'assurer que l'ancre de l'agitateur tourne librement sans frotter sur les parois du vase,
- mesurer à l'aide d'une éprouvette graduée 44 cm3 d'orthodichlorobenzène,
- les verser en rinçant les parois du vase,
- régler la vitesse d'agitation à 300 tr/min,
- peser 56,5 g de xylénol dans un becher,
- ajuster le thermocouple (la température doit être de 25°C),
- verser le xylénol et mettre en marche l'enregistreur préalablement étalonner: vitesse de déroulement du papier 6 cm / min,
- arrêt de l'enregistrement dès que la température atteint 80°C.

Résultats :

On trace la tangente au point d'inflexion de la courbe température en fonction du temps. Sa pente détermine la réactivité de la poudre de $P_2O_5$ en °C/min.

TABLEAU 2

| Essai | Conditions de fabrication de la poudre de $P_2O_5$ | Traitement mécanique selon l'invention | Caractéristiques de la poudre | | | |
|---|---|---|---|---|---|---|
| | | | densité (kg/m3) | | Hr | Réactivité |
| | | | aérée ($d_a$) | tassée ($d_t$) | ($d_t/d_a$) | (°C/min) |
| 1 | A | non | 866 | 1 118 | 1,29 | 4 |
| | A | oui | 1 041 | 1 272 | 1,22 | 8,5 |
| 2 | B | non | 629 | 851 | 1,35 | 6 |
| | B | oui | 877 | 1 087 | 1,24 | 12,5 |

**Revendications**

**1.** Procédé de préparation d'une poudre de pentoxyde de phosphore (variété hexagonale) à coulabilité améliorée, **caractérisée en ce que** l'on soumet ladite poudre de pentoxyde de phosphore à une agitation mécanique par voie sèche à température ambiante sous atmosphère de gaz sec pendant une durée allant de 5 minutes à 30 minutes.

2. Procédé selon la revendication 1, **caractérisé en ce que** la durée d'agitation mécanique est comprise entre 10 et 20 minutes.

3. Procédé selon l'une des revendications 1 ou 2, **caractérisé en ce que** la vitesse d'agitation du dispositif utilisé pour mettre en oeuvre le procédé va de 100 tr/min à 350 tr/min.

4. Procédé selon la revendication 3, **caractérisé en ce que** la vitesse d'agitation est comprise entre 150 tr/min et 300 tr/min.

5. Procédé selon l'une quelconque des revendications 1 à 4, **caractérisé en ce que** l'on opère à une température allant de 15 à 30°C.

6. Poudre de pentoxyde de phosphore (variété hexagonale) obtenue selon l'une des revendications 1 à 5, présentant un rapport Hausner Hr, défini comme étant le rapport de la densité apparente tassé dt sur la densité apparente aérée da, égal ou inférieur à 1,25.

**Claims**

1. A process for the preparation of a phosphorus pentoxide (hexagonal variety) powder with improved flowability, **characterized in that** said phosphorus pentoxide powder is subjected to mechanical stirring by the dry route at ambient temperature under a dry gas atmosphere for a period of time ranging from 5 minutes to 30 minutes.

2. The process as claimed in claim 1, **characterized in that** the mechanical stirring time is between 10 and 20 minutes.

3. The process as claimed in either of claims 1 and 2, **characterized in that** the stirring rate of the device used for carrying out the process ranges from 100 rev/min to 350 rev/min.

4. The process as claimed in claim 3, **characterized in that** the stirring rate is between 150 rev/min and 300 rev/min.

5. The process as claimed in any one of claims 1 to 4, **characterized in that** it is carried out at a temperature ranging from 15 to 30°C.

6. A phosphorus pentoxide (hexagonal variety) powder obtained as claimed in one of claims 1 to 5, exhibiting a Hausner ratio Hr, defined as being the ratio of the tamped apparent density $d_t$ to the aerated apparent density $d_a$, of equal to or less than 1.25.

**Patentansprüche**

1. Verfahren zur Herstellung von Phosphorpentoxidpulver (hexagonale Modifikation) mit verbesserter Fließfähigkeit, **dadurch gekennzeichnet, daß** man das Phosphorpentoxidpulver bei Umgebungstemperatur unter Trockengasatmosphäre über eine Dauer von 5 Minuten bis 30 Minuten trocken mechanisch rührt.

2. Verfahren nach Anspruch 1, **dadurch gekennzeichnet, daß** die Dauer des mechanischen Rührens zwischen 10 und 20 Minuten liegt.

3. Verfahren nach Anspruch 1 oder 2, **dadurch gekennzeichnet, daß** die Rührgeschwindigkeit der zur Durchführung des Verfahrens verwendeten Vorrichtung im Bereich von 100 U/min bis 350 U/min liegt.

4. Verfahren nach Anspruch 3, **dadurch gekennzeichnet, daß** die Rührgeschwindigkeit zwischen 150 U/min und 300 U/min liegt.

5. Verfahren nach einem der Ansprüche 1 bis 4, **dadurch gekennzeichnet, daß** man bei einer Temperatur von 15 bis 30°C arbeitet.

**6.** Nach einem Verfahren nach einem der Ansprüche 1 bis 5 erhaltenes Phosphorpentoxidpulver (hexagonale Modifikation) mit einem Hausner-Faktor (Hr), der als Verhältnis zwischen Stampfdichte $d_t$ und Schüttdichte $d_a$ definiert ist, kleiner gleich 1,25.

FIGURE 1

EP 1 305 260 B1

**EP 1 305 260 B1**

**RÉFÉRENCES CITÉES DANS LA DESCRIPTION**

**Documents brevets cités dans la description**

- EP 189766 B1